**Europäisches Patentamt**

**European Patent Office**

**Office européen des brevets**

(11) Publication number: **0 129 550**
**B1**

# (12) EUROPEAN PATENT SPECIFICATION

(45) Date of publication of patent specification: **04.11.87**

(21) Application number: **83903478.2**

(22) Date of filing: **11.11.83**

(86) International application number:
**PCT/AU83/00165**

(87) International publication number:
**WO 84/02153 07.06.84 Gazette 84/14**

(51) Int. Cl.⁴: **E 02 F 9/16,** B 62 D 51/02,
B 62 D 51/04

(54) EARTH-WORKING MACHINE.

(30) Priority: **22.11.82 AU 6907/82**
**07.04.83 AU 8772/83**

(43) Date of publication of application:
**02.01.85 Bulletin 85/01**

(45) Publication of the grant of the patent:
**04.11.87 Bulletin 87/45**

(84) Designated Contracting States:
**AT BE CH DE FR GB LI NL SE**

(56) References cited:
**GB-A- 883 953**
**GB-A- 945 400**
**GB-A- 994 778**
**GB-A-1 163 985**
**US-A-3 319 817**
**US-A-3 393 759**
**US-A-3 394 770**
**US-A-3 525 099**
**US-A-4 135 592**
**US-A-4 168 757**
**US-A-4 396 081**

(73) Proprietor: **RIGA'L UNIVERSAL LOADERS PTY.**
**LTD.**
**11 Pinter Drive**
**Southport, Queensland 4215 (AU)**

(72) Inventor: **WHIFFIN, Kenneth William**
**41 Currong Crescent**
**Mudgeeraba QLD 4215 (AU)**

(74) Representative: **Ford, Michael Frederick et al**
**MEWBURN ELLIS & CO. 2/3 Cursitor Street**
**London EC4A 1BQ (GB)**

Courier Press, Leamington Spa, England.

EP 0 129 550 B1

## Description

This invention relates to a skid-steer earth-working machine. The invention is particularly useful as a mini-loader which can be operated in restricted areas.

Small front-end loaders of the types sold under the Registered Trade Marks "Bobcat" (Clark Equipment Co.) and "Mustang" have found ready acceptance in earth-moving applications. However, these loaders are often too large to be used e.g. in domestic gardens or horse stables where only restricted access is available via narrow gate — or doorways. In these installations, any soil, manure, rubbish, or the like must be removed by wheelbarrow.

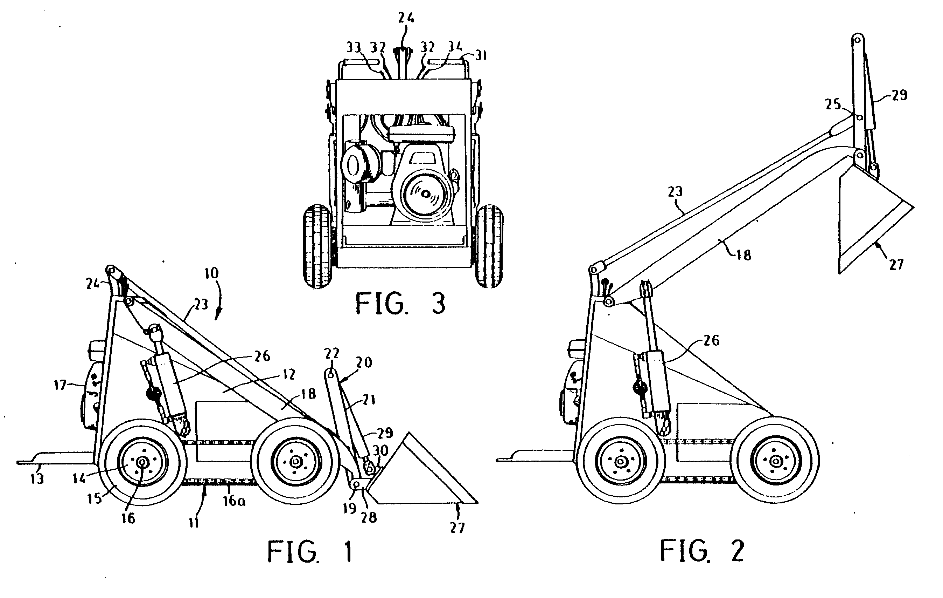

US—A—4168757 illustrates a common arrangement for skid-steer front-end loaders. The operator rides on a seat between booms which support an earth moving bucket. US—A—3393759, Figs. 1 to 9 describe a skid-steer front end loader in which the operator rides on a platform alongside the machine and its controls. Figs. 10 to 12 of US—A—3393759 show a different layout in which a driving seat and controls are provided at the rear of the machine while arms carrying a bucket are mounted on pivots at the front of the machine.

It is an object of the present invention to provide an earth-working machine which is very compact yet capable of carrying out a wide range of tasks.

It is a preferred object to provide a machine which is highly manoeuvrable and easily controllable.

It is a further preferred object to provide a machine which can be operated by an operator who may stand on a footplate at the rear of the machine or who may walk behind the machine.

It is a still further preferred object to provide a machine with safety (or "deadman's") controls so that the machine will stop if the operator should fall from the machine.

Other preferred objects of the present invention will become apparent from the following description.

In its broadest aspect the present invention resides in a skid-steer earth-working machine including:
  a chassis;
  a pair of driven wheels or a track, supporting the chassis at each side;
  drive means for the wheels or tracks;
  a boom pivotally mounted on the chassis;
  means to raise or lower the boom;
  a bucket or other earth-moving tool on the boom;
  a support for an operator to ride at the rear of the machine behind the boom; and
  controls operable to control the operation of the machine, which controls are mounted at or adjacent the rear of the chassis to be operable by the operator riding on said support;

characterised in that the support includes a foot plate at the rear of the chassis, below the tops of the wheels or tracks, on which an operator can stand, and in that the pivotal mounting of the boom is adjacent the controls.

Preferably the machine has four wheels arranged in two pairs connected together to provide the skid-steer drive and steering for the machine. Preferably one of each pair of wheels is driven by a hydraulic motor and is connected to the other wheel of the pair by a chain-and-sprocket drive.

Preferably each hydraulic motor is driven by a common hydraulic pump driven by a constant speed internal combustion engine, the motors being individually controlled by control levers and valves to provide the skid-steer drive and steering.

Preferably the boom has a pair of substantially parallel lifting arms raised and lowered by respective hydraulic rams. Preferably a tool mounting head is mounted on the forward end of the boom and is provided with a stabilizing linkage which provides a parallelogram type linkage between the chassis and the head to maintain the attitude of the head to the chassis as the boom is raised and lowered. Preferably the earth moving tool e.g. a bucket, platform, ripping tool or the like is pivotally mounted on the head and pivotally movable relative thereto by a hydraulic ram.

Preferably the controls are self-centering, providing "deadman's" controls stopping the machine if the operator should fall off the machine or fall over, and the controls and pivotal mounting of the booms are at substantially the same point in the front to rear direction of the machine.

To enable the invention to be fully understood, a preferred embodiment will now be described with reference to the accompanying drawings, in which:
  FIG. 1 is a side view of the machine arranged as a front-end loader with the boom lowered;
  FIG. 2 is a similar view but with the boom raised and the bucket lowered to a discharge position;
  FIG. 3 is a rear view of the machine;
  FIG. 4 is a side view of a post-hole digger attached to the machine;
  FIG. 5 is a perspective view of a load-carry platform attachment for the machine; and
  FIG. 6 is a side view of a forklift attachment attached to the machine.

The loader 10 shown in the drawings has a chassis 11 provided with body sides 12 which are triangular in side view, the body sides having panels within a tubular steel frame. A footplate 13 extends rearwardly from the chassis to provide a support for the operator.

The chassis is supported at each corner on ground wheels 14, fitted with pneumatic tyres 15, notably mounted on stub axles 16. The front axles are driven by respective hydraulic motors (not shown), the motors being driven by a hydraulic pump (also not shown) driven by a constant speed petrol engine 17. Chains and sprockets 16a connect the pairs of wheels 14 on each side to provide a skid-steer drive and steering arrangement for the loader.

A pair of lifting arms 18 are pivotally mounted at the apex of the body sides 12 at the rear of the loader. The forward ends of the arms are interconnected by a transverse shaft 19 on which is pivotally mounted a tool mounting head 20. The head 20 has a pair of upright parallel arms 21 pivotally mounted at their lower ends on the shaft 19 and connected at their upper ends by a shaft 22.

A stabilizing linkage 23 is pivotally mounted at its rear end on a post 24 above the apex of the body sides. The forward end of the linkage 23 is pivotally connected to the parallel arms 21, by a pin 25, to provide a parallelogram arrangement to maintain the attitude of the tool mounting head 20 to the chassis 11 as the lifting arms 18 are raised and lowered by respective hydraulic rams 26 mounted on the body sides 12.

A bucket 27 has a pair of rearward lugs 28 pivotally mounted on the shaft 19. The attitude of the bucket 27 to the tool head 20 is controlled by a hydraulic ram 29 connected at one end of pin 22 and at the other end to a central lug 30, on the rear of the bucket.

A pair of L-shaped grab handles 31 are provided at the rear of the loader. A respective lever 32 on each side controls the drive to the wheels 15 on that side. One lever 33 controls the rams 26 to raise and lower the lifting arms, while the other lever 34 controls the ram 29 which tilts the bucket 27 relative to the tool head 20. All the levers are self-centering to provide "deadman's" controls for the loader.

In use, the operator may ride on the foot plate 13 or walk behind the loader. By operating the levers 32 he can drive and steer the loader and by operating levers 33 and 34 he can control the operation of the bucket 27.

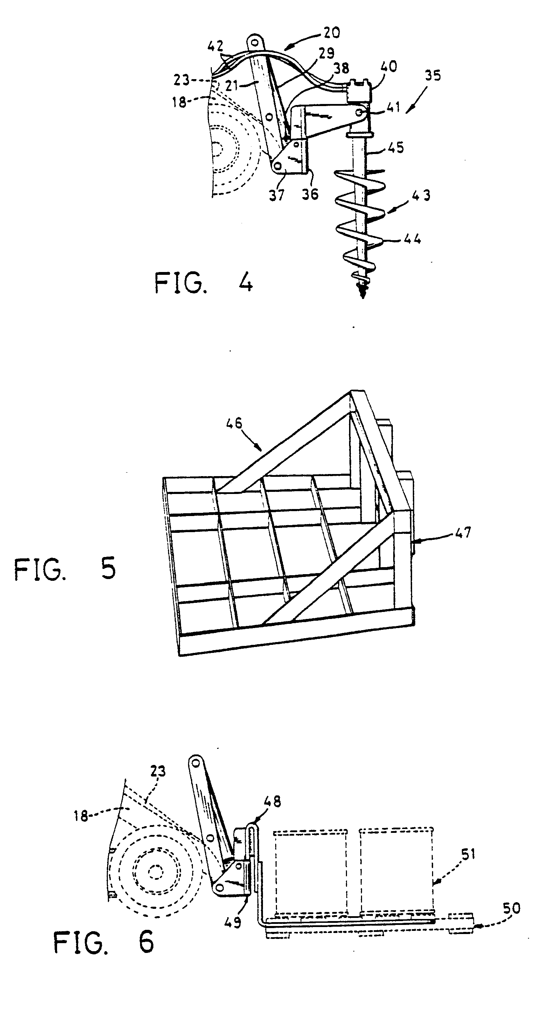

Referring to FIG. 4, a post-hole digger attachment 35 is shown mounted on the tool mounting head 20. The attachment has a tool bar 36 with a pair of rearward lugs 37 pivotally mounted on the shaft 19 and a central lug pivotally connected to the hydraulic ram 29.

A pair of brackets extend forwardly of the tool bar 36 and support a hydraulic motor 40 on pivot pins 41. The motor 40 is driven from the hydraulic pump on the machine via hydraulic hoses 42.

An auger 43, having a spiral flyte 44 around a central shaft 45, is connected to the motor 40 to drill down through the soil, the depth of the hole drilled being controlled by the rams 26, the auger 43 being maintained vertical by the hydraulic ram 29.

FIG. 5 shows a lifting platform 46 which may be fitted to the tool mounting head, suitable mounting lugs (not shown) being provided on the upright support frame 47.

Referring now to FIG. 6, a pair of lifting forks 48 may be mounted on a modified form 49 of the tool bar 36 of FIG. 4. As shown, the forks may be used to transport pallets 50 or the like supporting e.g. oil drums 51 or waste containers.

Other possible uses are for cleaning out stables, in market gardens and vineyards and for plumbers and drainers.

The loader is extremely compact and may be driven through standard 820mm gates and so is useful for the home gardener or landscaper. The loader has the ability of the "Bobcat" (Registered Trade Mark) type machines, albeit with a smaller capacity, but with the added flexibility of its compact size.

Various changes and modifications may be made to the embodiment described without departing from the scope of the present invention as defined in the appended claims.

**Claims**

1. A skid-steer earth-working machine including:
   a chassis (11);
   a pair of driven wheels (14) or a track, supporting the chassis at each side;
   drive means for the wheels or tracks;
   a boom (18, 19, 20) pivotally mounted on the chassis;
   means (26) to raise or lower the boom;
   a bucket (27) or other earth-moving tool on the boom;
   a support (13) for an operator to ride at the rear of the machine behind the boom; and
   controls (32, 33, 34) operable to control the operation of the machine, which controls are mounted at or adjacent the rear of the chassis to be operable by the operator riding on said support,
   characterised in that the support includes a foot plate (13) at the rear of the chassis, below the tops of the wheels or tracks, on which an operator can stand, and in that the pivotal mounting of the boom is adjacent the controls.

2. A machine as claimed in claim 1 wherein;
   the machine has two pairs of wheels (14) arranged in two pairs connected together to provide skid-steer drive;
   one of each pair of wheels (14) being driven by a hydraulic motor and connected to the other wheel of the pair by a chain and sprocket drive (16a); and
   each hydraulic motor is driven by a common hydraulic pump driven by an internal combustion engine (17) and is controlled by control levers (32) operable by the operator riding on said support.

3. A machine as claimed in claim 1 or claim 2 wherein;
   the boom has a pair of substantially parallel lifting arms (18) pivotally mounted adjacent the rear of the chassis;
   at least one hydraulic ram (26) is provided on the chassis to raise and lower the lifting arms;
   a tool mounting head (20) is pivotally mounted on the forward end of the lifting arms; and

a stabilizing linkage (23) is provided between the chassis and the mounting head to maintain the attitude of the head relative to the chassis as the lifting arms are raised or lowered.

4. A machine as claimed in claim 3 wherein:

an earth-moving (27, 43) or load-carrying (46, 48) tool is pivotally mounted on the mounting head (20); and

a hydraulic ram (29) is provided to pivotally move the tool relative to the head.

5. A machine according to any one of the preceding claims arranged such that the controls (32, 33, 34) are operable by an operator from a position walking behind the machine as well as from a position standing on the footplate (13).

6. A machine according to any one of the preceding claims wherein the controls (32, 33, 34) are self-centering providing "deadman's" controls stopping the machine if the operator should release the controls.

7. A machine according to any one of the preceding claims wherein the controls and the pivotal mounting of the booms are at substantially the same point in the front to rear direction of the machine.

## Patentansprüche

1. Erdbewegungsmaschine mit gegenläufiger Lenkung (skid-steer-Maschine) umfassend:

ein Fahrgestell (11);

ein Paar von angetriebenen Rädern (14) oder eine Laufkette, das bzw. die das Fahrgestell auf jeder Seite abstützt;

eine Antriebseinrichtung für die Räder oder Laufketten;

einen Ausleger (18, 19, 20), der schwenkbar auf dem Fahrgestell befestigt ist;

eine Einrichtung (26) zum Heben oder Senken des Auslegers;

einen Bagger- Eimer (27) oder ein anderes Erdbewegungswerkzeug am Ausleger;

einen Träger (13) für eine Bedienungsperson, die an der Rückseite bzw.-wand der Maschine hinter dem Ausleger mitfährt; und

Steuereinrichtungen (32, 33, 34), die zur Steuerung des Betriebes der Maschine betätigbar sind, welche Steuereinrichtungen an der oder angrenzend an die Rückseite des Fahrgestells angebracht sind, um von der Bedienungsperson betätigbar zu sein, die auf dem genannten Träger mitfährt, dadurch gekennzeichnet, daß der Träger eine Fußplatte (13) an der Rückseite des Fahrgestells unterhalb der oben gelegenen Bereiche der Räder oder Laufketten umfaßt, auf der eine Bedienungsperson stehen kann, und daß die schwenkbare Befestigung des Auslegers angrenzend an die Steuereinrichtungen vorgesehen ist.

2. Maschine nach Anspruch 1, worin:

die Maschine zwei Paare von Rädern (14) aufweist, die als zwei miteinander verbundene Paare angeordnet sind, um einen Antrieb mit gegenläufiger Lenkung (skid-steer) zu schaffen; eines der Räder jedes Paares von Rädern (14) durch einen Hydraulikmotor angetrieben ist und mit dem anderen Rad des Paares mittels eines Kettenantriebs (16a) verbunden ist; und

jeder Hydraulikmotor von einer gemeinsamen Hydraulik-Pumpe angetrieben ist, die von einem Brennkraftmotor (17) angetrieben ist und mittels Steuerhebeln (32) gesteuert ist, die durch die auf dem Träger mitfahrende Bedienungsperson betätigbar sind.

3. Maschine nach Anspruch 1 oder 2, worin;

der Ausleger ein Paar von im wesentlichen parallelen Hebearmen (18) aufweist, die schwenkbar angrenzend an die Rückseite bzw.-wand des Fahrgestells montiert sind;

wenigstens ein hydraulischer Druckkolben (26) auf dem Fahrgestell zum Heben und Senken der Hebearme vorgesehen ist;

ein Werkzeugmontagekopf (20) schwenkbar am vorderen Ende der Hebearme befestigt ist; und eine stabilisierende Verbindung (23) zwischen dem Fahrgestell und dem Montagekopf vorgesehen ist, um die Stellung des Kopfes in bezug auf das Fahrgestell während des Hebens und Senkens der Hebearme aufrechtzuerhalten.

4. Maschine nach Anspruch 3, worin:

ein erdbewegendes (27, 43) oder lastentragendes (46, 48) Werkzeug schwenkbar am Montagekopf (20) befestigt ist; und

ein hydraulischer Druckkolben (29) vorgesehen ist, um das Werkzeug schwenkbar in bezug auf den Kopf zu bewegen.

5. Maschine nach einem der vorhergehenden Ansprüche, die so angeordnet ist, daß die Steuereinrichtungen (32, 33, 34) von einer Bedienungsperson von einer Stellung aus betätigbar sind, in der die Person entweder hinter der Maschine hergeht oder auf der Fußplatte (13) steht.

6. Maschine nach einem der vorhergehenden Ansprüche, worin die Steuereinrichtungen (32, 33, 34) mittig einstellend sind und eine Totmannsteuerung bilden, die die Maschine zum Stillstand bringt, falls die Bedienungsperson die Steuereinrichtungen freigibt.

7. Maschine nach einem der vorhergehenden Ansprüche, worin die Steuereinrichtungen und die schwenkbare Befestigung der Ausleger sich in Richtung der Maschine von vorne nach hinten gesehen im wesentlichen in dem gleichen Punkt befinden.

## Revendications

1. Machine de terrassement à direction par patinage comportant:

— un châssis (11);

— une paire de roues entraînées (14) ou un chemin de roulement, supportant le châssis de chaque côté;

— des moyens d'entraînement pour les roues ou les chemins de roulement;

— une flèche (18, 19, 20) montée pivotante sur le châssis;

— des moyens (26) pour lever et abaisser la flèche;

— une benne (27) ou un autre outil de terrassement sur la barre;

— un support (13) pour un opérateur à l'arrière de la machine derrière la barre; et

— des commandes (32, 33, 34) pour faire fonctionner la machine, lesquelles commandes sont montées à l'arrière du châssis, ou à proximité de l'arrière du châssis, pour être actionnées par l'opérateur se trouvant sur ledit support, caractérisée en ce que le support comprend une plate-forme (13) à l'arrière du châssis, au-dessous des sommets des roues ou chemins de roulement, sur laquelle peut se tenir un opeérateur, et en ce que le montage pivotant de la barre est adjacent aux commandes.

2. Machine selon la revendication 1, dans laquelle;

— la machine présente deux paires de roues (14) qui sont reliées ensemble pour fournir un entraînement à direction par patinage;

— une roue de chaque paire (14) étant entraînée par un moteur hydraulique et reliée à l'autre roue de la paire par un entraînement (16a) à chaîne et pignon; et

— chaque moteur hydraulique est entraîné par une pompe hydraulique commune actionnée par un moteur à combustion interne (17) et est commandé par des leviers de commande (32) actionnables par l'opérateur se trouvant sur ledit support.

3. Machine selon la revendication 1 ou la revendication 2, dans laquelle:

— la flèche présente une paire de bras de levage sensiblement parallèles (18) montés pivotants de façon adjacente à l'arrière du châssis;

— au moins un piston hydraulique (26) est prévu sur le châssis pour lever et abaisser les bras de levage;

— une tête de montage d'outil (20) est montée pivotante à l'extrémité avant des bras de levage; et

— une tringlerie de stabilisation (23) est prévue entre le châssis et la tête de montage pour maintenir l'attitude de la tête par rapport au châssis alors que les bras de levage sont levés ou abaissés.

4. Machine selon la revendication 3, dans laquelle:

— un outil de terrassement (27, 43) ou porteur de charge (46, 48) est monté pivotant sur la tête de montage (20); et

— un piston hydraulique (29) est prévu pour faire pivoter l'outil par rapport à la tête.

5. Machine selon l'une quelconque des revendications précédentes agencée de sorte que les commandes (32, 33, 34) peuvent être actionnées par un opérateur à partir d'une position de marche derrière la machine aussi bien qu'à partir d'une position dans laquelle l'opérateur se tient sur la plate-forme (13).

6. Machine selon l'une quelconque des revendications précédentes, dans laquelle les commandes (32, 33, 34), sont à centrage automatique en fournissant des commandes de sécurité arrêtant la machine si l'opérateur relâche les commandes.

7. Machine selon l'une quelconque des revendications précédentes, dans laquelle les commandes et le montage pivotant de la flèche se trouvent à sensiblement le même point dans la direction de l'avant vers l'arrière de la machine.

FIG. 2

FIG. 3

FIG. 1

FIG. 4

FIG. 5

FIG. 6

2